# EUROPÄISCHE PATENTSCHRIFT

(11) **EP 0 948 774 B1**
(45) Veröffentlichungstag und Bekanntmachung des Hinweises auf die Patenterteilung: **29.11.2000**
(21) Anmeldenummer: 98917072.5
(22) Anmeldetag: 24.03.1998
(51) Int. Cl.: G06K 1/12, G06K 17/00

(54) **VERFAHREN UND VORRICHTUNG ZUM ZUSAMMENFÜHREN UND VERBINDEN VON KUNSTSTOFFKARTEN UND BEDRUCKTEN KARTENTRÄGERN**
METHOD AND DEVICE FOR BRINGING TOGETHER AND JOINING PLASTIC CARDS AND PRINTED CARD SUPPORTS
PROCEDE ET DISPOSITIF POUR REUNIR ET ASSEMBLER DES CARTES EN MATIERE PLASTIQUE ET DES SUPPORTS DE CARTES IMPRIMES

(30) Priorität: 17.06.1997 DE 19725579
(43) Veröffentlichungstag der Anmeldung: 13.10.1999
(73) Patentinhaber: BÖWE SYSTEC AG, 86159 Augsburg (DE)
(72) Erfinder: SCHMID, Eduard, D-86836 Untermeitingen (DE); ERPENSTEIN, Ulrich, D-86899 Landsberg (DE); DASSINGER, Herbert, D-86343 Königsbrunn (DE); MAGG, Wolfgang, D-86836 Lagerlechfeld (DE)
(74) Vertreter: Schoppe, Fritz, Dipl.-Ing.
(86) Internationale Anmeldenummer: EP9801737
(87) Internationale Veröffentlichungsnummer: WO9858340

(56) Entgegenhaltungen:
- WO-A-86/04170
- DE-C- 19 508 282

## Beschreibung

Die vorliegende Erfindung bezieht sich auf ein Verfahren und eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind.

Allgemein können mit bekannten Systemen Kunststoffkarten, wie z.B. dicke Kunststoffkarten vom Typ CR-80, mit Kartenträgern automatisch in variabler Stückzahl verbunden (appliziert) werden. Die mit Kunststoffkarten versehenen Kartenträger werden dann beispielsweise in einer Kuvertierstation in Kuverts verpackt und entweder geschuppt abgelegt oder einer weiteren Verarbeitung zugeführt, wie z.B. dem Sortieren oder Umreifen.

Bei einem aus der US-A-4,429,217 bekannten Verfahren und einer bekannten Vorrichtung werden vorsortierte und personalisierte Kunststoffkarten auf vorsortierte und personalisierte Kartenträger aufgebracht. Hierbei bedeutet die Bezeichnung-"personalisiert", daß die Kunststoffkarte bzw. der Kartenträger bereits mit den notwendigen Angaben, wie z.B. Name, Adresse etc., versehen ist. Die Kartenträger können hierbei aus einem Endlosstapel oder aus einem Einzelblattstapel zugeführt werden.

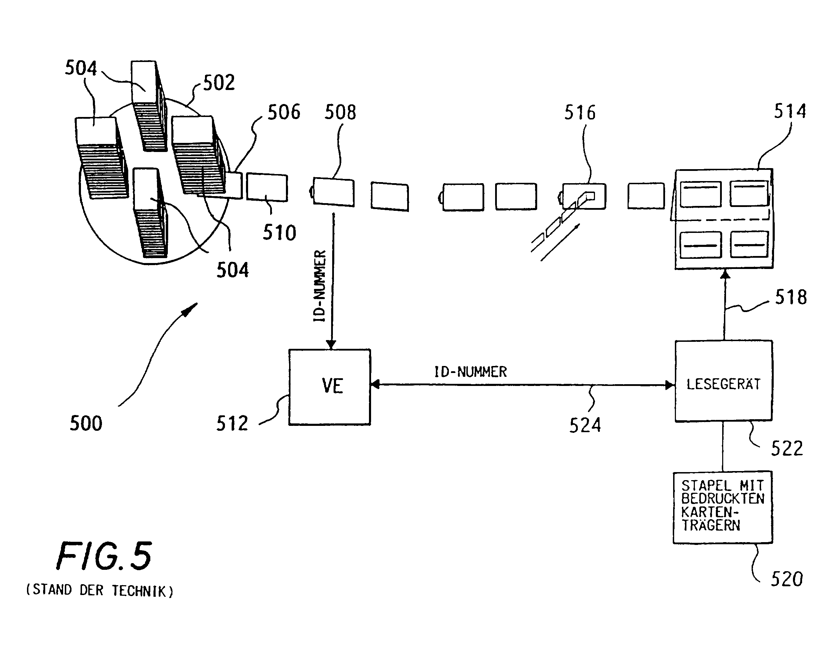

In Fig. 5 ist eine derartige Vorrichtung zum Applizieren von Kunststoffkarten und Kartenträgern dargestellt. Die Vorrichtung ist in ihrer Gesamtheit mit dem Bezugszeichen 500 versehen.

Bei dieser bekannten Vorrichtung sind die Kunststoffkarten in einer Revolvereinrichtung 502 enthalten, die vier Magazine 504 einschließt. Aus der Revolvereinrichtung 502 werden einzelne Kunststoffkarten 506 ausgegeben, die einer Leseeinrichtung 508 zugeführt werden. Die Zuführung der einzelnen Karten zu den unterschiedlichen Stationen erfolgt über sogenannter Stoppstellen 510, an denen die Karten so lange verweilen, bis von einer nachfolgenden Station ein Signal erhalten wird, das anzeigt, daß die nachfolgende Station zur Aufnahme der Karte bereit ist.

In der Leseeinrichtung 508 wird eine Identifikationsnummer (ID-Nummer) der Kunststoffkarte 506 gelesen. Eine Verarbeitungseinrichtung (VE) 512 erfaßt und speichert diese. Anschließend wird die Kunststoffkarte 506 über eine Mehrzahl von Stoppstellen 510 zu einer Appliziereinrichtung 514 geleitet. Vor dem Zuführen der Kunststoffkarte 506 zu der Appliziereinrichtung 514 kann diese mit einem Klebeetikett an einer Station 516 versehen werden, um die nachfolgende Verbindung mit dem Kartenträger sicherzustellen.

Aus einer zweiten Richtung, die nicht der Zuführungsrichtung der Kunststoffkarte 506 zu der Appliziereinrichtung 514 entspricht, wird der Kartenträger zugeführt (Pfeil 518).

Der Kartenträger ist in einem Stapel 520 enthalten, der die Kartenträger in einer vorsortierten Form enthält. Die Kartenträger weisen bereits, wie es oben beschrieben wurde, die entsprechenden Daten, wie z. B. den Namen und die Adresse des Kartenempfängers, auf.

Aus dem Stapel 520 wird der Kartenträger einem Lesegerät 522 zugeführt, das eine auf dem Kartenträger aufgedruckte Identifikationsnummer liest. Diese Identifikationsnummer wird mit der Identifikationsnummer derjenigen Karte verglichen (Pfeil 524), die sich an der letzten Stoppstelle vor der Appliziereinrichtung 514 befindet. Stimmen die Identifikationsnummern überein, so erfolgt eine Verbindung der Kunststoffkarte und des Kartenträgers.

Bei dieser bekannten Vorrichtung 500 sind alle Komponenten durch den gleichen Systemtakt gesteuert. Das heißt, daß die Anzahl der Takte, die verstreichen, bis eine Kunststoffkarte nach der Erfassung der Identifikationsnummer bei 508 die Appliziereinrichtung 514 erreicht, bekannt ist, so daß abhängig von dieser bekannten Laufzeit die Zuführung der Kartenträger vom Stapel 520 und die Überprüfung der Identifikationsnummern derart gesteuert werden kann, daß der Kartenträger die Appliziereinrichtung 514 zum gleichen Zeitpunkt wie die zu diesem Kartenträger gehörige Kunststoffkarte 506 erreicht.

Ein Nachteil dieser bekannten Vorrichtung besteht darin, daß sowohl die Kunststoffkarten als auch die Kartenträger vorsortiert sein müssen, und daß die Kartenträger ferner bereits personalisiert sein müssen. Dies führt zu einer erheblichen Einschränkung der Flexibilität einer solchen Vorrichtung.

Aus der DE 195 08 282 C1 ist ein Verfahren und eine Vorrichtung bekannt, um Kunststoffkarten, die mit einer Identifikationsmarkierung versehen sind, und bedruckte Kartenträger, die den jeweiligen Kunststoffkarten zugeordnet sind, zusammenzuführen und zu verbinden. Die korrekte Zuordnung von Karte und Träger wird durch eine Druckauftragsnummer erreicht, die einer Kunststoffkarte zugeordnet ist und auf einem Kartenträger aufgedruckt wird. Vor dem Verbinden wird überprüft, ob die Druckauftragsnummer der Kunststoffkarte, die vor dem Verbinden mit dem Kartenträger steht, mit einer Druckauftragsnummer eines vor der Verbindung stehenden Trägers übereinstimmt.

Ausgehend von diesem Stand der Technik liegt der vorliegenden Erfindung die Aufgabe zugrunde, ein vereinfachtes Verfahren und eine vereinfachte Vorrichtung zum Zusammenführen und Verbinden von Kunststoff karten und Kartenträgern zu schaffen, die eine korrekte Zuordnung von Karte und Träger ermöglichen, und eine verbesserte Flexibilität aufweisen.

Diese Aufgabe wird durch ein Verfahren zum Zusammenführen und Verbinden von Kunststoffkarten und Kartenträgern nach Anspruch 1, durch eine Vorrichtung zum Zusammenführen und Verbinden von Kunststoffkarten und Kartenträgern nach Anspruch 10 und durch ein System nach Anspruch 19, 20 und 21 gelöst.

Bevorzugte Weiterbildungen der vorliegenden Erfindung sind in den Unteransprüchen definiert.

Ein Vorteil der vorliegenden Erfindung liegt in der Verwendung des Prüfzeichens auf dem Kartenträger anstelle der Druckauftragsnummer oder der Identifikationsnummer. Dies führt zu einer Verbesserung des Datenschutzes, da das Prüfzeichen keine eindeutige Rückrechnung auf die Identifikationsmarkierung ermöglicht. Durch die Verwendung des Prüfzeichens erscheint die Identifikationsnummer, mittels der z.B. auf die Datenbank zur Abfrage von beispielsweise persönlichen Daten zugegriffen wird, nicht mehr auf dem Kartenträger und bleibt somit für Dritte unbekannt - auf der Kunststoffkarte ist diese Identifikationsnummer unsichtbar z.B. in einem Magnetstreifen oder ähnlichem enthalten. Der Zugriff auf persönliche Daten einer Person beispielsweise durch einen unerlaubten Zugriff auf die Datenbank durch Dritte kann gemäß der Erfindung also mit höherer Sicherheit unterbunden werden.

Nachfolgend werden unter Bezugnahme auf die beiliegenden Zeichnungen bevorzugte Ausführungsbeispiele der vorliegenden Erfindung näher beschrieben. Es zeigen:
- Fig. 1: eine allgemeine Darstellung einer Vorrichtung zum Zusammenführen und Verbinden von Kunststoffkarten und Kartenträgern gemäß der vorliegenden Erfindung, die zur Ausführung des erfindungsgemäßen Verfahrens geeignet ist;
- Fig. 2: ein erstes Ausführungsbeispiel der Vorrichtung zum Zusammenführen und Verbinden von Kunststoffkarten und Kartenträgern gemäß der vorliegenden Erfindung;
- Fig. 3: ein zweites Ausführungsbeispiel der Vorrichtung zum Zusammenführen und Verbinden von Kunststoff karten und Kartenträgern gemäß der vorliegenden Erfindung;
- Fig. 4: ein drittes Ausführungsbeispiel der Vorrichtung zum Zusammenführen und Verbinden von Kunststoffkarten und Kartenträgern gemäß der vorliegenden Erfindung;
- Fig. 5: eine Vorrichtung nach dem Stand der Technik, die ein Verfahren nach dem Stand der Technik ausführt.

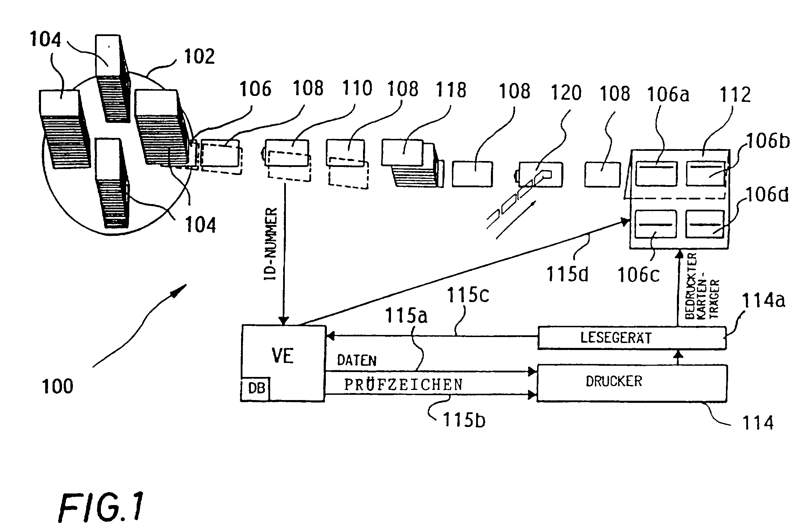

In Fig. 1 ist eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, gemäß der vorliegenden Erfindung dargestellt. Die erfindungsgemäße Vorrichtung ist in ihrer Gesamtheit mit dem Bezugszeichen 100 bezeichnet.

Die Vorrichtung 100 umfaßt eine Trägereinrichtung 102, die bei diesem Ausführungsbeispiel als Revolver ausgeführt ist. Der Revolver 102 enthält vier Magazine 104, die jeweils Kunststoffkarten 106 enthalten. Diese Karten sind bereits personalisiert, ihre Anordnung in den Magazinen 104 ist jedoch unsortiert (chaotisch). Über sogenannte Stoppstellen 108 gelangt eine Karte 106 zu einer Erfassungsstation 110. Die Bewegung der Karten 106 in der Vorrichtung 100 erfolgt auf eine in Fachkreisen an sich bekannte Art und Weise.

Über die Stoppstellen 108 wird die Karte 106 zu einer Appliziereinrichtung 112 bewegt, die die Karte 106 mit einem Kartenträger zusammenführt und verbindet. Die Erfassungsstation 110 ist mit einer Verarbeitungseinrichtung VE verbunden, der eine Datenbank DB zugeordnet ist. Die Appliziereinrichtung 112 ist über eine Leseeinrichtung 114a mit einem Drucker 114 verbunden. Der Drucker 114 ist mit der Verarbeitungseinrichtung VE durch eine Mehrzahl von Datenleitungen 115a, 115b verbunden. Die Leseeinrichtung 114a ist mit der Verarbeitungseinrichtung VE durch eine Datenleitung 115c verbunden.

Nachfolgend wird anhand der Fig. 1 die Funktionsweise der erfindungsgemäßen Vorrichtung 100 näher beschrieben.

Die Trägereinrichtung 102 stellt aus einem ihrer Magazine eine Kunststoffkarte 106 bereit, die zu der Erfassungsstation 110 bewegt wird. Die Erfassungsstation erfaßt in Verbindung mit der Verarbeitungseinrichtung VE die Identifikationsnummer der Kunststoffkarte und leitet ein Prüfzeichen aus der Identifikationsmarkierung der Kunststoffkarte 106 derart ab, daß ausgehend von dem Prüfzeichen keine eindeutige Rückrechnung auf die Identifikationsmarkierung möglich ist. Die Ableitung des Prüfzeichens wird unten genauer beschrieben. Die Verarbeitungseinrichtung VE liest mittels der Identifikationsmarkierung die Datenbank DB aus und überträgt die Daten über die Datenleitung 115a an den Drucker 114. Ferner überträgt die Verarbeitungseinrichtung VE über die Datenleitung 115b das Prüfzeichen an den Drucker. Der Drucker 114 bedruckt einen Kartenträger mit den aus der Datenbank ausgelesenen Daten sowie mit dem empfangenen Prüfzeichen. Während der Drucker den Kartenträger bedruckt, bewegt sich die Kunststoffkarte 106 von der Erfassungsstation 110 in Richtung der Appliziereinrichtung 112. Bei Erreichen der letzten Stoppstelle 108 vor der Appliziereinrichtung 112 wird der bedruckte Kartenträger aus dem Drucker an die Leseeinrichtung 114a übergeben. Die Leseeinrichtung 114a liest das auf dem Kartenträger aufgedruckte Prüfzeichen und übergibt dieses über die Datenleitung 115c an die Verarbeitungseinrichtung VE, welche bestimmt, ob das Prüfzeichen des Kartenträgers mit dem Prüfzeichen, das aus der Identifikationsmarkierung der Kunststoffkarte 106, die sich an der Stoppstelle 108 unmittelbar vor der Appliziereinrichtung 112 befindet, abgeleitet wurde, übereinstimmt. Stimmen die Prüfzeichen überein, so gibt die Verarbeitungseinrichtung VE über eine Datenleitung 115d ein Signal aus, das bewirkt, daß die Appliziereinrichtung 112 die Kunststoffkarte 106 und den Kartenträger zusammenführt und verbindet.

Nachfolgend wird das Ableiten des Prüfzeichens aus der Identifikationsmarkierung der Karte 106 näher beschrieben.

Gemäß einem Ausführungsbeispiel wird das Prüfzeichen aus einzelnen Elementen oder Teilen der Identifikationsmarkierung gebildet, indem vorbestimmte Teile oder Elemente zusammengefaßt werden und so das Prüfzeichen bilden. Das Prüfzeichen wird eine Zeichen sein, dessen Informationsgehalt gegenüber demjenigen der Identifikationsmarkierung der Karte reduziert ist. Die Erzeugung des Prüfzeichens erfolgt also unter Informationsverlust aus der Identifikationsmarkierung.

Gemäß einem weiteren Ausführungsbeispiel wird das Prüfzeichen durch Bilden der Prüfsumme aus der Identifikationsmarkierung der Karte gebildet. Zur Bildung der Prüfsumme existieren verschiedene Verfahren, von denen nachfolgend das XOR-Prüfsummenbildungsverfahren (XOR = Exklusive ODER-Verknüpfung) näher beschrieben wird.

Es sei angenommen, daß die Identifikationsmarkierung in der Form einer Zahl vorliegt, die eine Mehrzahl von Stellen hat. Bei diesem Verfahren wird über eine vorbestimmte Anzahl von Stellen der Identifikationsmarkierung jeweils die Prüfsumme gebildet. Als Beispiel sei eine Identifikationsmarkierung angenommen, die in hexadezimaler Form vorliegt. Die Bildung der Prüfsumme erfolgt durch eine XOR-Verknüpfung von vorbestimmten Stellen der Identifikationsmarkierung, so daß sich eine Prüfsumme mit einer Mehrzahl von Stellen ergibt.

### Beispiel:

IDENTIFIKATIONSMARKIERUNG (hex) = 01 02 FE 08 07 09 (die unterstrichenen Stellen werden verknüpft)
- Bildung der Prüfsumme durch:: XOR von 01 mit 02 = 03
XOR von FE mit 08 = F6
XOR von 07 mit 09 = 0E
- Ergebnis:: PRÜFSUMME = 03 F6 0E

Hat die Identifikationsmarkierung eine ungerade Anzahl von Stellen, so kann die Prüfsumme durch Auffüllen mit einem Füllwert vervollständigt werden.

Diese Zahl - Prüfsumme - wird anstelle der Originalnummer - Identifikationsmarkierung der Karte - z.B. als OCR-Information in dem System verwendet (OCR = Optical Character Recognition = optische Zeichenerkennung). Durch die Prüfsummenbildung ist eine Rückkehr auf die Originalnummer, also die Identifikationsmarkierung der Karte, nicht mehr möglich.

Es wird darauf hingewiesen, daß die vorliegende Erfindung nicht auf hexadezimale Darstellungen der Identifikationsmarkierung beschränkt ist, vielmehr kann die Identifikationsmarkierung auch in anderen Darstellungen, wie z. B. binär, dezimal etc., vorliegen. Weiterhin ist die Erfindung nicht auf XOR-Verknüpfungen beschränkt. Die Verwendung von UND-, ODER-, NAND- oder NOR-Verknüpfungen ist ebenfalls möglich.

Es sei darauf hingewiesen, daß bei der erfindungsgemäßen Vorrichtung 100 bis auf den Drucker alle übrigen Komponenten dem Systemtakt unterworfen sind. Aus diesem Grund kann auf eine erneute Erfassung des Prüfzeichens der Kunststoffkarte an der Stoppstelle 108 unmittelbar vor der Appliziereinrichtung 112 verzichtet werden, da der Verarbeitungseinrichtung VE die Dauer, d.h. die Anzahl der Takte, bekannt ist, die eine Karte 106 benötigt, um von der Erfassungsstation 110 zu der Appliziereinrichtung 112 zu laufen.

Die spezielle Konfiguration der Vorrichtung hängt entscheidend von der Art des verwendeten Druckers ab. Um keine Zeitverluste durch den Weg der Kartenträger vom Druckwerk des Druckers 114 bis zur Appliziereinrichtung 112 zu erleiden, wird mindestens eine Anzahl gelesener Karten, entsprechend der Anzahl der Kartenträger zwischen der Erfassungsstation 110 und der Appliziereinrichtung 112, zwischengespeichert. Der Zwischenpuffer 118 kann beispielsweise ausgebildet sein, um 20 bis 80, vorzugsweise etwa 50 Kunststoffkarten aufzunehmen.

Bei dem in Fig. 1 dargestellten Ausführungsbeispiel ist ferner ein Etikettierer 120 vorgesehen, der die Kunststoffkarte 106 vor dem Erreichen der Appliziereinrichtung 112 mit einem Klebeetikett versieht, so daß diese sicher auf dem Kartenträger befestigbar ist.

Obwohl im vorangegangenen lediglich das Zusammenführen und Verbinden von einer Kunststoffkarte 106 mit einem Kartenträger beschrieben wurde, ist es offensichtlich, daß die vorliegende Erfindung nicht auf das Befestigen von nur einer Kunststoffkarte auf einem Kartenträger beschränkt ist. In Fig. 1 ist eine Appliziereinrichtung 112 dargestellt, die es ermöglicht, wahlweise bis zu vier Kunststoffkarten 106a-d mit einem einzigen Kartenträger zusammenzuführen und zu verbinden.

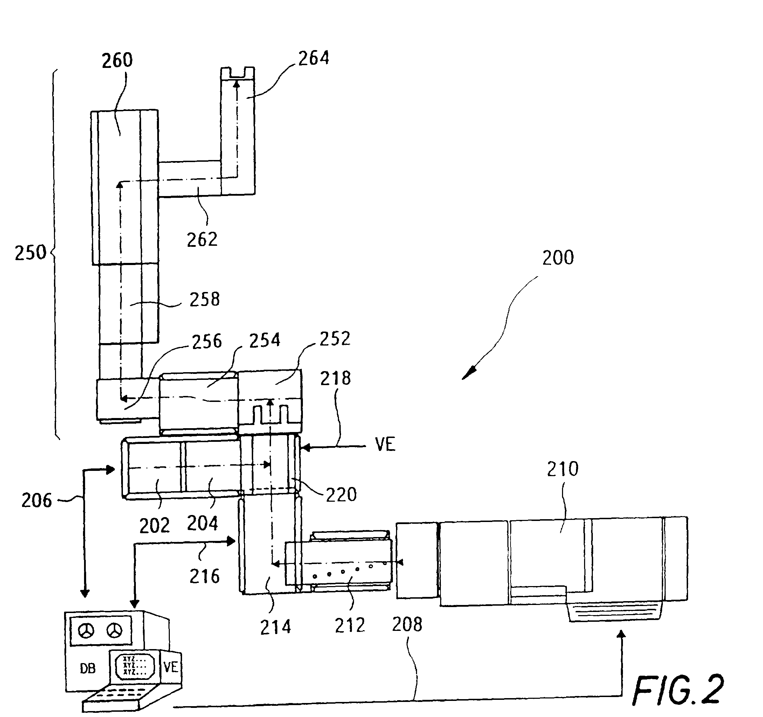

Anhand der Figuren 2 bis 5 werden nachfolgend bevorzugte Ausführungsbeispiele von Systemen beschrieben, die Kunststoffkarten, die mit einer Identifikationsmarkierung versehen sind, und bedruckte Kartenträger, die den jeweiligen Kunststoffkarten zugeordnet sind, zusammenführen und verbinden und die die applizierten Kartenträger mit Kunststoffkarte verpacken. In den Fig. 2 bis 4 sind jeweils gleiche Komponenten mit gleichen Bezugszeichen versehen.

Fig. 2 zeigt ein System 200, das einen Kartenturm 202 aufweist, der die Kunststoffkarten enthält. An den Kartenturm 202 schließt sich eine Leseeinrichtung 204 an, die einen Zwischenpuffer einschließt. Über eine Datenleitung 206 erfaßt eine Verarbeitungseinrichtung VE die Identifikationsmarkierung der Kunststoffkarte, die durch die Leseeinrichtung 204 gelesen wurde. Die Verarbeitungseinrichtung VE umfaßt eine Datenbank DB, aus der abhängig von der erfaßten Identifikationsmarkierung Daten auslesbar sind. Die Verarbeitungseinrichtung VE leitet das Prüfzeichen aus der Identifikationsmarkierung der Kunststoffkarte 106 derart ab, daß ausgehend von dem Prüfzeichen keine eindeutige Rückrechnung auf die Identifikationsmarkierung möglich ist Über eine weitere Datenleitung 208 ist die Verarbeitungseinrichtung VE mit einem Einzelblattdrucker 210 verbunden.

Der Einzelblattdrucker 210 empfängt über die Datenleitung 208 sowohl die aus der Datenbank DB ausgelesenen Daten als auch das Prüfzeichen. Der Einzelblattdrucker 210 bedruckt den Kartenträger mit den durch die Verarbeitungseinrichtung VE empfangenen Daten sowie mit dem Prüfzeichen. Die einzelnen Blätter, die von dem Einzelblattdrucker 210 bedruckt wurden, werden von einer Transfereinrichtung 212 empfangen, die die einzelnen Blätter an einen Papierpuffer 214 weitergibt. Der Papierpuffer weist einen Einzelblatteinzug und eine Einzelblattausgabe auf. Am Ausgang des Papierpuffers schließt dieser eine Leseeinrichtung (nicht dargestellt) ein, die über eine Datenleitung 216 mit der Verarbeitungseinrichtung VE verbunden ist.

Die Leseeinrichtung erfaßt das Prüfzeichen des Kartenträgers und übergibt dieses über die Datenleitung 216 an die Verarbeitungseinrichtung VE. Die Verarbeitungseinrichtung VE bestimmt, ob das übergebene Prüfzeichen des Kartenträgers mit dem Prüfzeichens, das aus der Identifikationsmarkierung der Kunststoffkarte 106, die vor der Verbindung mit dem Kartenträger steht, abgeleitet wurde, übereinstimmt. Die Verarbeitungseinrichtung VE ist über eine Datenleitung 218 mit einer Appliziereinrichtung 220 verbunden. Bestimmt die Verarbeitungseinrichtung VE, daß die Prüfzeichen der Kunststoffkarte und des Kartenträgers übereinstimmen, so gibt sie über die Leitung 218 ein Signal an die Appliziereinrichtung, die die Kunststoffkarte aus der Einrichtung 204 mit dem Kartenträger aus der Einrichtung 214 zusammenführt und verbindet. Anschließend gibt die Appliziereinrichtung den Kartenträger mit Kunststoffkarte an eine Verpackungseinrichtung aus, die in ihrer Gesamtheit mit dem Bezugszeichen 250 versehen ist.

Die Verpackungseinrichtung 250 umfaßt eine Umlenkeinrichtung 252, die den Kartenträger mit Kunststoffkarte, der von der Appliziereinrichtung 220 ausgegeben wurde, empfängt. Die Einrichtung 252 übergibt den Kartenträger mit Kunststoffkarte an eine Längsfalzeinrichtung, die diesen ihrerseits einer Sammelstation 256 zuführt. Über eine Zusammentragbahn 258 gelangt der Kartenträger mit Kunststoffkarte zu einer Verpackungs- und Verschließeinrichtung 260. Aus dieser wird er mittels einer Ausfahreinrichtung 262 entfernt und in einem Schuppenband 264 geschuppt abgelegt.

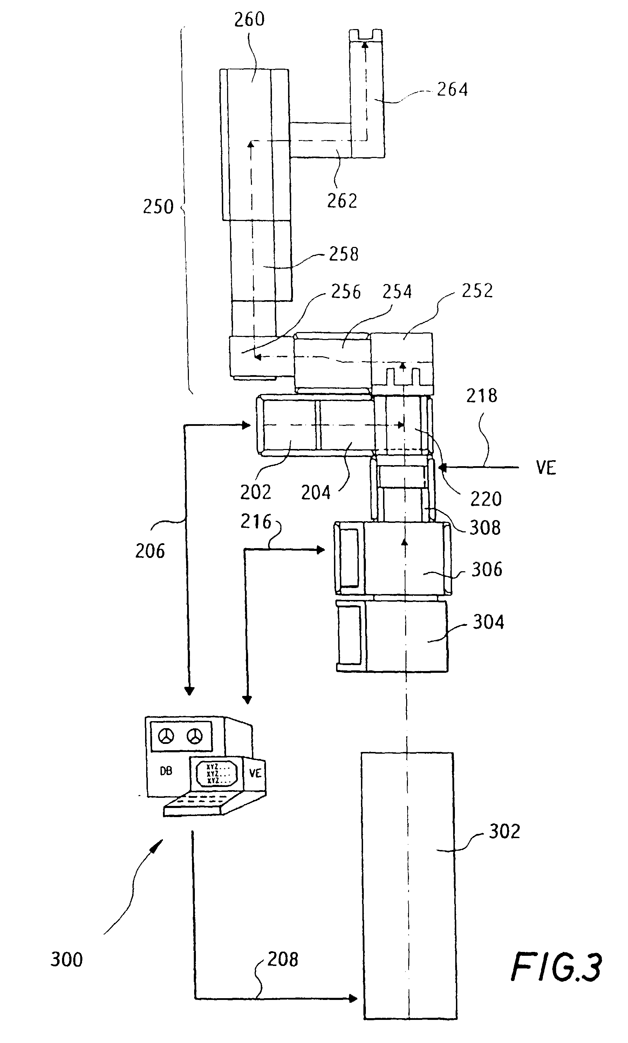

In Fig. 3 ist eine weiteres Ausführungsbeispiel eines Systems 300 zum Zusammenführen und Verbinden von Kunststoffkarten, die mit einer Identifikationsnummer versehen sind, und bedruckten Kartenträgern, die den jeweiligen Kunststoffkarten zugeordnet sind, und zum Verpacken der applizierten Kartenträger mit Kunststoffkarte dargestellt. Dieses System ist in seiner Gesamtheit mit dem Bezugszeichen 300 versehen. Komponenten, die den in Fig. 2 dargestellten Komponenten entsprechen, sind mit dem gleichen Bezugszeichen versehen. Eine erneute Beschreibung dieser Komponenten erfolgt nicht.

Ein Unterschied dieses Systems 300 gegenüber dem System aus Fig. 2 besteht darin, daß anstelle eines Einzelblattdruckers ein Endlospapierdrucker 302 verwendet wird. Beabstandet von dem Endlospapierdrucker 302 ist ein Schlaufenpuffer 304 angeordnet, der das Endlospapier schlaufenartig zwischenpuffert. Zwischen dem Schlaufenpuffer und dem Endlospapierdrucker 302 bildet sich eine Papierschlaufe. Dem Schlaufenpuffer 304 ist eine Schneidemaschine 306 nachgeordnet, die das Endlospapier vereinzelt. Der Schneidemaschine ist ebenfalls eine Leseeinrichtung zugeordnet, die über die Datenleitung 216 mit der Verarbeitungseinrichtung VE in Verbindung steht. Dies wurde bereits anhand von Fig. 2 beschrieben. Zwischen der Schneideeinrichtung 306 und der Appliziereinrichtung 220 ist eine Querfalzeinrichtung 308 angeordnet, die das vereinzelte Papier aus der Schneidemaschine 306 empfängt, dieses mit einem Querfalz versieht, und an die Appliziereinrichtung 220 ausgibt.

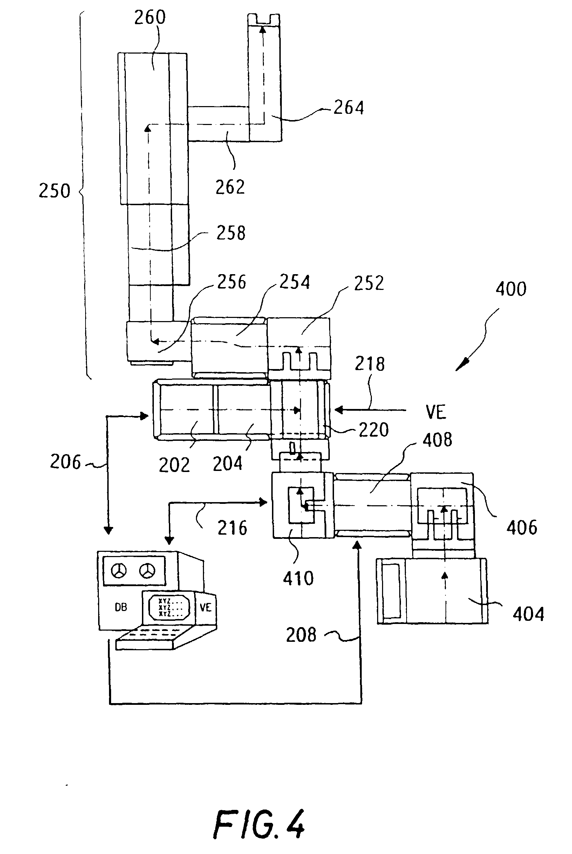

In Fig. 4 ist wiederum ein weiteres Ausführungsbeispiel eines Systems zum Zusammenführen und Verbinden von Kunststoffkarten, die mit einer Identifikationsmarkierung versehen sind, und bedruckten Kartenträgern, die den jeweiligen Kunststoffkarten zugeordnet sind, und zum Verpacken der applizierten Kartenträger mit Kunststoffkarte dargestellt. Das System ist in seiner Gesamtheit mit dem Bezugszeichen 400 bezeichnet und Komponenten, die denjenigen entsprechen, die anhand von Fig. 2 beschrieben wurden, sind mit gleichen Bezugszeichen versehen. Eine erneute Beschreibung dieser Komponenten erfolgt nicht.

Das System 400 unterscheidet sich von den vorhergehenden Systemen 200, 300 dahingehend, daß kein Zwischenpuffer vorgesehen ist, sondern lediglich eine Leseeinrichtung 204, die am Eingang der Appliziereinrichtung 220 plaziert ist. Nachfolgend wird beschrieben, aus welchen Gründen bei diesem Ausführungsbeispiel auf den Zwischenpuffer verzichtet werden kann. Das. System 400 umfaßt eine Beschickungsvorrichtung 404, die bereits vorgedruckte, nicht personalisierte Papierbögen enthält. Das heißt, daß auf diesen Papierbögen bereits beispielsweise vorgefertigte Brieftexte etc. aufgedruckt sind, so daß lediglich die persönlichen Angaben noch einzutragen sind. Die Beschickungseinrichtung 404 beschickt über eine erste Umlenkeinrichtung 406 einen Tintenstrahldrucker 408. Der Tintenstrahldrucker 408 fügt in die vorgedruckten Papiere die notwendigen Daten ein, z.B. Name, Adresse etc., und das Prüfzeichen, die er auf die bereits beschriebene Art und Weise über die Datenleitung 208 von der Verarbeitungseinrichtung VE erhält. Über eine zweite Umlenkeinrichtung 410 ist der Kartenträger der Appliziereinrichtung 220 zuführbar. Die zweite Umlenkeinrichtung 410 kann ebenfalls eine Leseeinrichtung (nicht dargestellt) umfassen, die auf die bereits beschriebene Art und Weise das Prüfzeichen erfaßt. Der Grund dafür, daß bei diesem Ausführungsbeispiel kein Zwischenpuffer verwendet werden muß, liegt darin, daß der Drucker lediglich das Prüfzeichen sowie Namen, Adresse etc. auf den Kartenträger aufdrucken muß, der bereits in der Anlage ist. Die Anzahl der Kartenträger in der Anlage übersteigt nicht die Anzahl der Kunststoffkarten nach der Erfassungsstation und vor der Appliziereinrichtung. Daher ist eine Zwischenpufferung der Kunststoffkarten nicht notwendig.

In Abweichung von dem oben beschriebenen Ausführungsbeispiel kann die Leseeinrichtung auch am Ausgang des Tintenstrahldruckers vorgesehen sein.

Die vorhergehende Beschreibung von bevorzugten Ausführungsbeispielen der vorliegenden Erfindung bezog sich auf ein sogenanntes "Online"-System, bei dem mittels der Identifikationsnummer auf die Datenbank zugegriffen wurde, und in der Verarbeitungseinrichtung das Prüfzeichen erzeugt wurde und gemeinsam mit den Daten an einen Drucker ausgegeben wurde. Unter "Online" ist in diesem Zusammenhang die Verbindung von Datenbank und Drucker gemäß den im vorhergehenden beschriebenen Ausführungsbeispielen zu verstehen.

Neben diesem "Online"-Betrieb ist es jedoch auch möglich, den Drucker unabhängig von der Datenbank bzw. der Verarbeitungseinrichtung zu betreiben, d. h. den Drucker und den Rest der Anlage bzw. des Systems voneinander getrennt auszugestalten, so daß anders als bei dem in Fig. 1 dargestellten System der Zusammeführ- und Verbindungseinrichtung 112 der Kartenträger von einem Stapel mit vorgedruckten Kartenträgern zugeführt werden. In diesem Fall werden zunächst die Formulare bzw. Kartenträger gedruckt und mit dem Prüfzeichen versehen. Der Algorithmus zur Erstellung des Prüfzeichens ist bekannt und die erforderlichen Daten werden aus einer getrennt von dem restlichen System angeordneten Datenbank über einen Drucker auf die Kartenträger aufgebracht. Die so bedruckten Kartenträger kommen in eine geeignete Vorrichtung zur Zuführung zu der Zusammenführ- und Verbindungseinrichtung 112, wobei zwischen der Stapelvorrichtung und der Vorrichtung 112 ein Lesegerät vorgesehen ist, das das Prüfzeichen auf dem der Zusammenführ- und Verbindungseinrichtung 112 zuzuführenden Kartenträger liest und mit dem von der Identifikationsmarkierung der Kunststoffkarte abgeleiteten Prüfzeichen vergleicht. Im Falle einer Übereinstimmung erfolgt dann die Zusammenführung und Verbindung von Karte und Kartenträger.

## Patentansprüche

1. Verfahren zum zusammenführen und Verbinden von Kunststoffkarten, die mit einer Identifikationsmarkierung versehen sind, und bedruckten Kartenträgern, die den jeweiligen Kunststoffkarten zugeordnet sind, mit folgenden Schritten :
a) Bereitstellen der Kunststoffkarte (106);
b) Erfassen der Identifikationsmarkierung der Kunststoffkarte (106);
c) Bereitstellen eines Prüfzeichens;
d) Auslesen einer Datenbank (DB) mittels der Identifikationsmarkierung;
e) Bedrucken des Kartenträgers mit aus der Datenbank (DB) ausgelesenen Daten sowie mit dem Prüfzeichen;
f) Erfassen des Prüfzeichens des Kartenträgers vor dem Verbinden des Kartenträgers mit der Kunststoffkarte (106);
g) Bestimmen, ob das Prüfzeichen, das aus der Identifikationsmarkierung der Kunststoffkarte (106), die vor dem Verbinden mit dem Kartenträger steht, abgeleitet wurde, mit dem im Schritt f) erfaßten Prüfzeichen übereinstimmt; und
h) falls die Prüfzeichen der Kunststoffkarte (106) und des Kartenträgers übereinstimmen, Zusammenführen und Verbinden der Kunststoffkarte (106) und des Kartenträgers;
dadurch gekennzeichnet,
daß das Bereitstellen des Prüfzeichens das Ableiten des Prüfzeichens aus der Identifikationsmarkierung der Kunststoffkarte (106) umfaßt, derart, daß ausgehend von dem Prüfzeichen keine eindeutige Rückrechnung auf die Identifikationsmarkierung möglich ist.

2. Verfahren nach Anspruch 1, dadurch gekennzeichnet,
daß das Prüfzeichen unter Informationsverlust aus der Identifikationsmarkierung abgeleitet wird.

3. Verfahren nach Anspruch 1 oder 2, dadurch gekennzeichnet,
daß der Schritt c) das Bilden einer Prüfsumme aus der Identifikationsmarkierung umfaßt.

4. Verfahren nach Anspruch 3, dadurch gekennzeichnet,
daß die Identifikationsmarkierung eine Zahl mit einer Mehrzahl von Stellen ist; und
daß die Prüfsumme durch logische Verknüpfung einer vorbestimmten Anzahl von Stellen miteinander derart gebildet wird, daß die Prüfsumme eine Mehrzahl von Stellen hat.

5. Verfahren nach Anspruch 4, dadurch gekennzeichnet,
daß die Identifikationsmarkierung in hexadezimaler Form vorliegt.

6. Verfahren nach Anspruch 4 oder 5, dadurch gekennzeichnet,
daß die logische Verknüpfung eine UND-, ODER-, NAND-, NOR- oder XOR- (Exklusive ODER) Verknüpfung umfaßt.

7. Verfahren nach einem der Ansprüche 1 bis 3, gekennzeichnet durch folgenden Schritt nach dem Schritt b)
- Zwischenpuffern der Kunststoffkarten.

8. Verfahren nach einem der Ansprüche 1 bis 7, gekennzeichnet durch folgenden Schritt vor dem Schritt h)
- Aufbringen eines Klebeetiketts auf der Kunststoffkarte (106).

9. Verfahren nach einem der Ansprüche 1 bis 8, dadurch gekennzeichnet,
daß eine Mehrzahl von Kunststoffkarten mit einem Kartenträger zusammengeführt und verbunden werden.

10. Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit:
- einer Trägereinrichtung (102), in der die Kunststoffkarten (106) enthalten sind;
- einer Einrichtung (110, VE) zum Erfassen der Identifikationsmarkierung der Kunststoffkarte (106) und zum Bereitstellen eines Prüfzeichens;
- einer Datenbankeinrichtung (DB), die Daten in Abhängigkeit von der Identifikationsmarkierung enthält;
- einer Druckereinrichtung (114), die die aus der Datenbankeinrichtung (DB) ausgelesenen Daten und das Prüfzeichen auf den Kartenträger druckt;
- einer Einrichtung (114a, VE) zum Erfassen des Prüfzeichens des Karten trägers und zum Vergleichen des Prüfzeichens, das aus der Identifikationsmarkierung der Kunststoffkarte (106), die vor der Verbindung mit dem Kartenträger steht, abgeleitet wurde, mit dem Prüfzeichen des Kartenträgers; und
- einer Zusammenführ- und Verbindungseinrichtung (112), die die Kunststoffkarte (106) und den Kartenträger zusammenführt und verbindet, falls die Prüfzeichen der Kunststoff karte (106) und des Kartenträgers übereinstimmen;
dadurch gekennzeichnet,
daß die Einrichtung (110, VE) zum Erfassen der Identifikationsmarkierung der Kunststoffkarte (106) und zum Bereitstellen des Prüfzeichens das Prüfzeichen aus der Identifikationsmarkierung der Kunststoffkarte (106) derart ableitet, daß ausgehend von dem Prüfzeichen keine eindeutige Rückrechnung auf die Identifikationsmarkierung möglich ist.

11. Vorrichtung nach Anspruch 10, dadurch gekennzeichnet,
daß das Prüfzeichen unter Informationsverlust aus der Identifikationsmarkierung abgeleitet wird.

12. Vorrichtung nach Anspruch 10 oder 11, dadurch gekennzeichnet,
daß die Verarbeitungseinrichtung eine Prüfsumme aus der Identifikationsmarkierung bildet.

13. Vorrichtung nach Anspruch 12, dadurch gekennzeichnet,
daß die Identifikationsmarkierung eine Zahl mit einer Mehrzahl von Stellen ist; und
daß die Prüfsumme durch logische Verknüpfung einer vorbestimmten Anzahl von Stellen miteinander derart gebildet wird, daß die Prüfsumme eine Mehrzahl von Stellen hat.

14. Vorrichtung nach Anspruch 13, dadurch gekennzeichnet,
daß die Identifikationsmarkierung in hexadezimaler Form vorliegt.

15. Vorrichtung nach Anspruch 13 oder 14, dadurch gekennzeichnet,
daß die logische Verknüpfung eine UND-, ODER-, NAND-, NOR- oder XOR- (Exklusive ODER) Verknüpfung umfaßt.

16. Vorrichtung nach einem der Ansprüche 10 bis 15, gekennzeichnet durch
eine Zwischenpuffereinrichtung (118), die angeordnet ist, um die Kunststoffkarten zwischenzupuffern.

17. Vorrichtung nach einem der Ansprüche 10 bis 16, gekennzeichnet durch
eine Einrichtung (120), die ein Klebeetikett auf der Kunststoffkarte (106) aufbringt.

18. Vorrichtung nach einem der Ansprüche 10 bis 17, dadurch gekennzeichnet,
daß die Zusammenführ- und Verbindungseinrichtung (112) eine Mehrzahl von Kunststoffkarten mit einem Kartenträger zusammenführt und verbindet.

19. System zum Zusammenführen und Verbinden von Kunststoffkarten, die mit einer Identifikationsmarkierung versehen sind, und bedruckten Kartenträgern, die den jeweiligen Kunststoffkarten zugeordnet sind, und zum Verpacken der applizierten Kartenträger mit Kunststoffkarte, mit
- einem Kartenturm (202), der die Kunststoffkarten enthält;
- einem Zwischenpuffer (204) zur Zwischenpufferung der aus dem Kartenturm (202) erhaltenen Kunststoffkarten;
- einer Verarbeitungseinrichtung (VE), die die Identifikationsmarkierung der Kunststoffkarte erfaßt und ein Prüfzeichen bereitstellt;
- einer Datenbank (DB), aus der Daten abhängig von der Identifikationsmarkierung auslesbar sind;
- einem Einzelblattdrucker (210), der mit der Verarbeitungseinrichtung (VE) verbunden ist, und den Kartenträger aufgrund der von der Verarbeitungseinrichtung (VE) empfangenen Daten bedruckt und den Kartenträger mit dem Prüfzeichen versieht;
- einer Transfereinrichtung (212), die den von dem Einzelblattdrucker (210) ausgegebenen Kartenträger empfängt;
- einem Papierpuffer (214) mit Einzelblatteinzug, Querfalzeinrichtung und Einzelblattausgabe, der von der Transfereinrichtung (212) den Kartenträger empfängt;
- einer Leseeinrichtung, die das Prüfzeichen des Kartenträgers erfaßt und an die Verarbeitungseinrichtung (VE) übergibt, und die bestimmt, ob das übergebene Prüfzeichen des Kartenträgers mit dem Prüfzeichens, das aus der Identifikationsmarkierung der Kunststoffkarte (106), die vor der Verbindung mit dem Kartenträger steht, abgeleitet wurde, übereinstimmt;
- einer Appliziereinrichtung (220), die mit der Verarbeitungseinrichtung (VE) verbunden ist, die die Kunststoffkarte aus dem zwischenpuffer (204) mit dem Kartenträger zusammenführt und verbindet, und den Kartenträger mit Kunststoffkarte ausgibt, wenn die Prüfzeichen der Kunststoffkarte und des Kartenträgers übereinstimmen; und
- einer Vorrichtung (250) zum Verpacken des applizierten Kartenträgers mit Kunststoffkarte;
dadurch gekennzeichnet,
daß die Verarbeitungseinrichtung (VE) das Prüfzeichen aus der Identifikationsmarkierung der Kunststoffkarte (106) derart ableitet, daß ausgehend von dem Prüfzeichen keine eindeutige Rückrechnung auf die Identifikationsmarkierung möglich ist.

20. System zum zusammenführen und Verbinden von Kunststoffkarten, die mit einer Identifikationsmarkierung versehen sind, und bedruckten Kartenträgern, die den jeweiligen Kunststoffkarten zugeordnet sind, und zum Verpacken der applizierten Kartenträger mit Kunststoffkarte, mit
- einem Kartenturm (202), der die Kunststoffkarten enthält;
- einem Zwischenpuffer (204) zur Zwischenpufferung der aus dem Kartenturm (202) erhaltenen Kunststoffkarten;
- einer Verarbeitungseinrichtung (VE), die die Identifikationsmarkierung der Kunststoffkarte erfaßt und ein Prüfzeichen bereitstellt;
- einer Datenbank (DB), aus der Daten abhängig von der Identifikationsmarkierung auslesbar sind;
- einem Endlospapierdrucker (302), der mit der Verarbeitungseinrichtung (VE) verbunden ist und den Kartenträger aufgrund der von der Verarbeitungseinrichtung (VE) empfangenen Daten bedruckt und den Kartenträger mit dem Prüfzeichen versieht;
- einem beabstandet zum Endlospapierdrucker (302) angeordneten Schlaufenpuffer (304);
- einer Schneidemaschine (306), die das Endlospapier vereinzelt;
- einer Leseeinrichtung, die das Prüfzeichen des Kartenträgers erfaßt und an die Verarbeitungseinrichtung (VE) übergibt, und die bestimmt, ob das übergebene Prüfzeichen des Kartenträgers mit dem Prüfzeichens, das aus der Identifikationsmarkierung der Kunststoffkarte (106), die vor der Verbindung mit dem Kartenträger steht, abgeleitet wurde, übereinstimmt;
- einer Querfalzeinrichtung (308), die das vereinzelte Papier empfängt;
- einer Appliziereinrichtung (220), die mit der Verarbeitungseinrichtung (VE) verbunden ist, die die Kunststoffkarte aus dem Zwischenpuffer (204) mit dem Kartenträger zusammenführt und verbindet, und den Kartenträger mit Kunststoffkarte ausgibt, wenn die Prüfzeichen der Kunststoffkarte und des Kartenträgers übereinstimmen; und
- einer Vorrichtung (250) zum Verpacken des applizierten Kartenträgers mit Kunststoffkarte;
dadurch gekennzeichnet,
daß die Verarbeitungseinrichtung (VE) das Prüfzeichen aus der Identifikationsmarkierung der Kunststoffkarte (106) derart ableitet, daß ausgehend von dem Prüfzeichen keine eindeutige Rückrechnung auf die Identifikationsmarkierung möglich ist.

21. System zum Zusammenführen und Verbinden von Kunststoffkarten, die mit einer Identifikationsmarkierung versehen sind, und bedruckten Kartenträgern, die den jeweiligen Kunststoffkarten zugeordnet sind, und zum Verpacken der applizierten Kartenträger mit Kunststoffkarte, mit
- einem Kartenturm (202), der die Kunststoffkarten enthält;
- einer Verarbeitungseinrichtung (VE, 204), die die Identifikationsmarkierung der Kunststoffkarte erfaßt und ein Prüfzeichen bereitstellt;
- einer Datenbank (DB), aus der Daten abhängig von der Identifikationsmarkierung auslesbar sind;
- einer Beschickungseinrichtung (404), die bereits vorbedruckte, nicht personalisierte Papiere enthält;
- einer erste Umlenkeinrichtung (406), die durch die Beschickungseinrichtung (404) beschickt wird;
- einer Tintenstrahldruckereinheit (408), die das vorgedruckte, nicht personalisierte Papier von der ersten Umlenkeinrichtung (406) empfängt, und den Kartenträger aufgrund der von der Verarbeitungseinrichtung (VE) empfangenen Daten bedruckt und den Kartenträger mit dem Prüfzeichen versieht;
- einer zweite Umlenkeinrichtung (410), die die bedruckten Kartenträger empfängt;
- einer Querfalzeinrichtung;
- einer Leseeinrichtung, die das Prüfzeichen des Kartenträgers erfaßt und an die Verarbeitungseinrichtung (VE) übergibt, und die bestimmt, ob das übergebene Prüfzeichen des Kartenträgers mit dem Prüfzeichens, das aus der Identifikationsmarkierung der Kunststoffkarte (106), die vor der Verbindung mit dem Kartenträger steht, abgeleitet wurde, übereinstimmt;
- einer Appliziereinrichtung (202), die mit der Verarbeitungseinrichtung (VE) verbunden ist, die Kunststoffkarte mit dem Kartenträger zusammenführt und verbindet und den Kartenträger mit Kunststoffkarte ausgibt, wenn die Prüfzeichen der Kunststoffkarte und des Kartenträgers übereinstimmen; und
- einer Vorrichtung (250) zum Verpacken des applizierten Kartenträgers mit Kunststoffkarte;
dadurch gekennzeichnet;
daß die Verarbeitungseinrichtung (VE, 204) das Prüfzeichen aus der Identifikationsmarkierung der Kunststoffkarte (106) derart ableitet, daß ausgehend von dem Prüfzeichen keine eindeutige Rückrechnung auf die Identifikationsmarkierung möglich ist.

22. System nach einem der Ansprüche 19 bis 21, dadurch gekennzeichnet,
daß die Vorrichtung (250) zum Verpacken des applizierten Kartenträgers mit Kunststoffkarte folgende Merkmale aufweist:
- eine Umlenkeinrichtung (252);
- eine Längsfalzeinrichtung (254);
- eine Sammelstation (256);
- eine Zusammentragbahn (258);
- eine Verpackungs- und Verschließeinrichtung (260);
- eine Ausfahreinrichtung (262); und
- ein Schuppenband (264).

## Claims

1. Method of bringing together and joining plastic cards, which are provided with an identification mark, and printed card carriers associated with the respective plastic cards, comprising the following steps:
a) providing the plastic card (106);
b) detecting the identification mark of said plastic card (106);
c) providing a test mark;
d) reading a data base (DB) by means of said identification mark;
e) printing on the card carrier data read from the data base (DB) as well as the test mark;
f) detecting the test mark of the card carrier prior to joining said card carrier to the plastic card (106);
g) determining whether the test mark derived from the identification mark of the plastic card (106), which is about to be joined to the card carrier, corresponds to the test mark detected in step f); and,
h) provided that the test marks of the plastic card (106) and of the card carrier correspond, bringing together and joining the plastic card (106) and the card carrier,
characterized in that
providing the test mark comprises deriving the test mark from said identification mark of the plastic card (106) in such a way that unequivocal calculating back to the identification mark is not possible on the basis of the test mark.

2. Method according to claim 1, characterized in that
the test mark is derived from the identification mark under loss of information.

3. Method according to claims 1 or 2, characterized in that
step c) comprises the formation of a test sum from the identification mark.

4. Method according to claim 3, characterized in that
the identification mark is a number with a plurality of digits; and
by logically interconnecting a predetermined number of digits the test sum is formed in such a way that said test sum has a plurality of digits.

5. Method according to claim 4, characterized in that
the identification mark exists in hexadecimal form.

6. Method according to claims 4 or 5, characterized in that
the logical operation comprises an AND, OR, NAND, NOR or XOR (exclusive OR) operation.

7. Method according to any of claims 1 to 3, characterized by the following step after step b)
- storing the plastic cards temporarily.

8. Method according to any of claims 1 to 7, characterized by the following step prior to step h)
- applying a gummed label to the plastic card (106).

9. Method according to any of claims 1 to 8, characterized in that
a plurality of plastic cards is brought together with and joined to a card carrier.

10. Apparatus for bringing together and joining plastic cards, which are provided with an identification mark, and printed card carriers associated with the respective plastic cards, comprising
- a carrier means (102) containing the plastic cards (106);
- means (110, VE) for detecting the identification mark of the plastic card (106) and for providing a test mark;
- a data base means (DB) containing data depending on the identification mark;
- a printer means (114) which prints onto the card carrier the data read from said data base means (DB) as well as the test mark;
- a means (114a, VE) for detecting the test mark of the card carrier and for comparing the test mark derived from the identification mark of the plastic card (106), which is about to be joined to the card carrier, with the test mark of the card carrier; and
- a bringing-together and joining means (112) bringing together and joining the plastic card (106) and the card carrier, if the test marks of the plastic card (106) and of the card carrier correspond,
characterized in that
the means (110, VE) for detecting the identification mark of the plastic card (106) and for providing the test mark derives the test mark from said identification mark of the plastic card (1069 in such a way that unequivocal calculating back to the identification mark is not possible on the basis of the test mark.

11. Apparatus according to claim 10, characterized in that
the test mark is derived from the identification mark under loss of information.

12. Apparatus according to claims 10 or 11, characterized in that
said processing means forms test sum from the identification mark.

13. Apparatus according to claim 12, characterized in that
the identification mark is a number with a plurality of digits; and
by logically interconnecting a predetermined number of digits the test sum is formed in such a way that said test sum has a plurality of digits.

14. Apparatus according to claim 13, characterized in that
the identification mark exists in hexadecimal form.

15. Apparatus according to claims 13 or 14, characterized in that
the logical operation comprises an AND, OR, NAND, NOR or XOR (exclusive OR) operation.

16. Apparatus according to any of claims 10 to 15, characterized by
a temporary store (118) which is provided for temporarily storing the plastic cards.

17. Apparatus according to any of claims 10 to 16, characterized by
a means (120) which applies a gummed label to the plastic card (106).

18. Apparatus according to claim 10 to 17, characterized in that
the bringing-together and joining means (112) brings together a plurality of plastic cards with one card carrier and joins them to said card carrier.

19. System for bringing together and joining plastic cards provided with an identification mark, and printed card carriers associated with the respective plastic cards and for packing the plastic cards having applied thereto the card carriers, comprising
- a tower (202) of cards comprising the plastic cards;
- a temporary store (204) for temporarily storing the plastic cards received from said tower (202) of cards;
- a processing means (VE) which detects the identification mark of the plastic card and which provides a test mark;
- a data base (DB) from which data can be read depending on said identification mark;
- a single-sheet printer (210) connected to the processing means (VE), said single-sheet printer printing the card carrier on the basis of the data received from the processing means (VE) and providing said card carrier with the test mark;
- a transfer means (212) receiving the card carrier discharged from said single-sheet printer (210);
- a temporary paper store (214) provided with a single-sheet feed means, a transverse folding means, and a single-sheet discharge means and receiving the card carrier from the transfer means (212);
- a reader which detects the test mark of the card carrier and transfers it to the processing means (VE) and which determines whether the transmitted test mark of the card carrier corresponds to the test mark derived from the identification mark of the plastic card, which is about to be joined to the card carrier;
- an application means (220) which is connected to the processing means (VE) and which is used for bringing together and joining the plastic card, which comes from the temporary store (204), and the card carrier, said application means discharging the card carrier with the plastic card, if the test marks of said plastic card and of said card carrier correspond; and
- a device (250) for packing the plastic card having applied thereto the card carrier,
characterized in that
the processing means (VE) derives the test mark from said identification mark of the plastic card (106) in such a way that unequivocal calculating back to the identification mark is not possible on the basis of the test mark.

20. System for bringing together and joining plastic cards provided with an identification mark, and printed card carriers associated with the respective plastic cards, and for packing the plastic cards having applied thereto the card carriers, comprising
- a tower (202) of cards comprising the plastic cards;
- a temporary store (204) for temporarily storing the plastic cards received from said tower (202) of cards;
- a processing means (VE) which detects the identification mark of the plastic card and which provides a test mark;
- a data base (DB) from which data can be read depending on said identification mark;
- a continuous-paper printer (302) connected to the processing means (VE), said continuous-paper printer printing the card carrier on the basis of the data received from the processing means (VE) and providing said card carrier with the test mark;
- loop-type temporary store (302) which arranged in spaced relationship with the continuous-paper printer (302);
- a cutting machine (306) which separates the continuous paper;
- a reader which detects the test mark of the card carrier and transfers it to the processing means (VE) and which determines whether the transmitted test mark of the card carrier corresponds to the test mark derived from the identification mark of the plastic card (106), which is about to be joined to the card carrier;
- a transverse folding means (308) which receives the separated paper;
- an application means (220) which is connected to the processing means (VE) and which is used for bringing together and joining the plastic card, which comes from the temporary store (204), and the card carrier, said application means discharging the card carrier with the plastic card, if the test marks of said plastic card and of said card carrier correspond; and
- a device (250) for packing the plastic card having applied thereto the card carrier,
characterized in that
the processing means (VE) derives the test mark from said identification mark of the plastic card (106) in such a way that unequivocal calculating back to the identification mark is not possible on the basis of the test mark;

21. System which is used for bringing together and joining plastic cards provided with an identification mark and printed card carriers associated with the respective plastic cards and which is used for packing the plastic cards having applied thereto the card carriers, comprising
- a tower (202) of cards comprising the plastic cards;
- a processing means (VE, 204) which detects the identification mark of the plastic card and which provides a test mark;
- a data base (DB) from which data can be read depending on said identification mark;
- a feed device (404) containing non-personalized paper sheets which have already been preprinted;
- a first rerouting means (406) fed by said feed device (404);
- an ink-jet printing unit (408) which receives the preprinted, non-personalized paper sheets from said first rerouting means (406) and which prints the card carrier on the basis of the data received from the processing means (VE) and provides said card carrier with the test mark;
- a second rerouting means (410) receiving the printed card carriers;
- a transverse folding means;
- a reader which detects the test mark of the card carrier and transfers it to the processing means (VE) and which determines whether the transmitted test mark of the card carrier corresponds to the test mark derived from the identification mark of the plastic card (106), which is about to be joined to the card carrier;
- an application means (202) which is connected to the processing means (VE) and which is used for bringing together and joining the plastic card and the card carrier, said application means discharging the card carrier with the plastic card, if the test marks of said plastic card and of said card carrier correspond; and
- a device (250) for packing the plastic card having applied thereto the card carrier,
characterized in that
the processing means (VE, 204) derives a test mark from said identification mark of the plastic card (106) in such a way that unequivocal calculating back to the identification mark is not possible on the basis of the test mark.

22. System according to any of claims 19 to 21, characterized in that
the device (250) for packing the plastic card having applied thereto the card carrier is provided with the following features:
- a rerouting means (252);
- a longitudinal folding means (254);
- a collector station (256);
- a collecting path (258);
- a packing and closing means (260);
- a removal means (262); and
- a scaled band (264).

## Revendications

1. Procédé pour réunir et assembler des cartes en matière plastique munies d'un repère d'identification et de supports de cartes imprimés associés aux cartes en matière plastique correspondantes, aux étapes suivantes consistant à :
a) préparer la carte en matière plastique (106) ;
b) saisir le repère d'identification de la carte en matière plastique (106) ;
c) préparer un repère de contrôle ;
d) lire une banque de données (DB) à l'aide du repère d'identification ;
e) imprimer sur le support de carte les données lues de la banque de données (DB) ainsi que le repère de contrôle ;
f) saisir le repère de contrôle du support de carte avant d'assembler le support de carte avec la carte en matière plastique (106) ;
g) déterminer si le repère de contrôle qui a été dérivé du repère d'identification de la carte en matière plastique (106) présente pour assemblage avec le support de carte coïncide avec le repère de contrôle saisi à l'étape f) ; et
h) si les repères de contrôle de la carte en matière plastique (106) et du support de carte coïncident, réunir et assembler la carte en matière plastique (106) et le support de carte ;
caractérisé par le fait que la préparation du repère de contrôle comporte la dérivation du repère de contrôle à partir du repère d'identification de la carte en matière plastique (106), de sorte que, partant du repère de contrôle, aucun calcul de retour univoque au repère d'identification ne soit possible.

2. Procédé suivant la revendication 1, caractérisé par le fait que le repère de contrôle est dérivé, avec perte d'informations, du repère d'identification.

3. Procédé suivant la revendication 1 ou 2, caractérisé par le fait que l'étape c) comporte la formation d'une somme de contrôle à partir du repère d'identification.

4. Procédé suivant la revendication 3, caractérisé par le fait
que le repère d'identification est un nombre avec une pluralité de positions ; et
que la somme de contrôle est formée par association logique entre elles d'un nombre prédéterminé de positions, de sorte que la somme de contrôle possède une pluralité de positions.

5. Procédé suivant la revendication 4, caractérisé par le fait que le repère d'identification se présente de forme hexadécimale.

6. Procédé suivant la revendication 4 ou 5, caractérisé par le fait que l'association logique comporte une association AND (ET), OR (OU), NAND, NOR ou XOR (OR exclusif).

7. Procédé suivant l'une des revendications 1 à 3, caractérisé par l'étape suivante, après l'étape b), consistant à
- placer dans un réservoir-tampon intermédiaire les cartes en matière plastique.

8. Procédé suivant l'une des revendications 1 à 7, caractérisé par l'étape suivante avant l'étape h) consistant à
- appliquer une étiquette adhésive sur la cartes en matière plastique (106).

9. Procédé suivant l'une des revendications 1 à 8, caractérisé par le fait qu'une pluralité de cartes en matière plastique sont réunies et assemblées avec un support de carte.

10. Dispositif pour réunir et assembler des cartes en matière plastique munies d'un repère d'identification et de supports de cartes imprimés associés aux cartes en matière plastique correspondantes, avec :
- un dispositif de support (102) dans lequel sont contenues les cartes en matière plastique (106) ;
- un dispositif (110, VE) destiné à saisir le repère d'identification de la carte en matière plastique (106) et à préparer un repère de contrôle ;
- un dispositif de banque de données (DB) contenant des données en fonction du repère d'identification ;
- un dispositif imprimant (114) qui imprime les données lues de la banque de données (DB) et le repère de contrôle sur le support de carte ;
- un dispositif (114a, VE) destiné à saisir le repère de contrôle du support de carte et à comparer le repère de contrôle qui a été dérivé du repère d'identification de la carte en matière plastique (106) présente pour assemblage avec le support de carte avec le repère de contrôle de la carte en matière plastique (106) ; et
- un dispositif de réunion et d'assemblage (112) qui réunit et assemble la carte en matière plastique (106) et le support de carte si les repères de contrôle de la carte en matière plastique (106) et du support de carte coïncident;
caractérisé par le fait que le dispositif (110, VE) destiné à saisir le repère d'identification de la carte en matière plastique (106) et à préparer le repère de contrôle dérive le repère de contrôle à partir du repère d'identification de la carte en matière plastique (106), de sorte que, partant du repère de contrôle, aucun calcul de retour univoque au repère d'identification ne soit possible.

11. Dispositif suivant la revendication 10, caractérisé par le fait que le repère de contrôle est dérivé, avec perte d'informations, du repère d'identification.

12. Dispositif suivant la revendication 10 ou 11, caractérisé par le fait que le dispositif de traitement forme une somme de contrôle à partir du repère d'identification.

13. Dispositif suivant la revendication 12, caractérisé par le fait
que le repère d'identification est un nombre avec une pluralité de positions ; et
que la somme de contrôle est formée par association logique entre elles d'un nombre prédéterminé de positions, de sorte que la somme de contrôle possède une pluralité de positions.

14. Dispositif suivant la revendication 12, caractérisé par le fait que le repère d'identification se présente de forme hexadécimale.

15. Dispositif suivant la revendication 13 ou 14, caractérisé par le fait que l'association logique comporte une association AND (ET), OR (OU), NAND, NOR ou XOR (OR exclusif).

16. Dispositif suivant l'une des revendications 10 à 15, caractérisé par un dispositif de placement dans un réservoir-tampon intermédiaire (118) disposé pour placer dans un réservoir-tampon intermédiaire les cartes en matière plastique.

17. Dispositif suivant l'une des revendications 10 à 16, caractérisé par un dispositif (120) qui applique une étiquette adhésive sur la carte en matière plastique (106).

18. Dispositif suivant l'une des revendications 10 à 17, caractérisé par le fait que le dispositif de réunion et d'assemblage (112) réunit et assemble une pluralité de cartes en matière plastique avec un support de carte.

19. Système pour réunir et assembler des cartes en matière plastique munies d'un repère d'identification et de supports de cartes imprimés associés aux cartes en matière plastique correspondantes et pour emballer les supports de carte à carte en matière plastique appliquée, avec :
- une tour à cartes (202) contenant les cartes en matière plastique ;
- un réservoir-tampon intermédiaire (204) destiné au placement dans un réservoir-tampon intermédiaire des cartes en matière plastique obtenues de la tour à cartes (202) ;
- un dispositif de traitement (VE) qui saisit le repère d'identification de la carte en matière plastique et prépare un repère de contrôle ;
- une banque de données (DB) de laquelle peuvent être lues des données en fonction du repère d'identification ;
- une imprimante de feuilles individuelles (210) qui est reliée au dispositif de traitement (VE) et qui imprime le support de carte sur base des données reçues du dispositif de traitement (VE) et munit le support de carte du repère de contrôle ;
- un dispositif de transfert (212) qui reçoit le support de carte émis par l'imprimante de feuilles individuelles (210) ;
- un réservoir-tampon à papier (214) avec insertion de feuilles individuelles, dispositif de pliage transversal et sortie de feuilles individuelles, lequel reçoit le support de carte du dispositif de transfert (212) ;
- un dispositif de lecture qui saisit et transmet au dispositif de traitement (VE) le repère de contrôle de la carte et qui détermine si le repère de contrôle transmis du support de carte coïncide avec le repère de contrôle dérivé du repère d'identification de la carte en matière plastique (106) présente pour assemblage avec le support de carte ;
- un dispositif d'application (220), relié au dispositif de traitement (VE), qui unit et assemble la carte en matière plastique venant du réservoir-tampon intermédiaire (204) avec le support de carte et émet le support de carte à carte en matière plastique lorsque les repères de contrôle de la carte en matière plastique et du support de carte coïncident ; et
- un dispositif (250) destiné à emballer le support de carte à carte en matière plastique appliquée ;
caractérisé par le fait que le dispositif de traitement (VE) dérive le repère de contrôle à partir du repère d'identification de la carte en matière plastique (106), de sorte que, partant du repère de contrôle, aucun calcul de retour univoque au repère d'identification ne soit possible.

20. Système pour réunir et assembler des cartes en matière plastique munies d'un repère d'identification et de supports de cartes imprimés associés aux cartes en matière plastique correspondantes et pour emballer les supports de carte à carte en matière plastique appliquée, avec :
- une tour à cartes (202) contenant les cartes en matière plastique ;
- un réservoir-tampon intermédiaire (204) destiné au placement dans un réservoir-tampon intermédiaire des cartes en matière plastique obtenues de la tour à cartes (202) ;
- un dispositif de traitement (VE) qui saisit le repère d'identification de la carte en matière plastique et prépare un repère de contrôle ;
- une banque de données (DB) de laquelle peuvent être lues des données en fonction du repère d'identification ;
- une imprimante à papier continu (302) qui est reliée au dispositif de traitement (VE) et qui imprime le support de carte sur base des données reçues du dispositif de traitement (VE) et munit le support de carte du repère de contrôle ;
- un réservoir-tampon en boucle (304) disposé à une distance de l'imprimante à papier continu (302) ;
- une machine à découper (306) qui sépare le papier continu en feuilles individuelles;
- un dispositif de lecture qui saisit et transmet au dispositif de traitement (VE) le repère de contrôle de la carte et qui détermine si le repère de contrôle transmis du support de carte coïncide avec le repère de contrôle dérivé du repère d'identification de la carte en matière plastique (106) présente pour assemblage avec le support de carte ;
- un dispositif de pliage transversal (308) qui reçoit le papier séparé en feuilles individuelles ;
- un dispositif d'application (220), relié au dispositif de traitement (VE), qui unit et assemble la carte en matière plastique venant du réservoir-tampon intermédiaire (204) avec le support de carte et émet le support de carte à carte en matière plastique lorsque les repères de contrôle de la carte en matière plastique et du support de carte coïncident ; et
- un dispositif (250) destiné à emballer le support de carte à carte en matière plastique appliquée ;
caractérisé par le fait que le dispositif de traitement (VE) dérive le repère de contrôle à partir du repère d'identification de la carte en matière plastique (106), de sorte que, partant du repère de contrôle, aucun calcul de retour univoque au repère d'identification ne soit possible.

21. Système pour réunir et assembler des cartes en matière plastique munies d'un repère d'identification et de supports de cartes imprimés associés aux cartes en matière plastique correspondantes et pour emballer les supports de carte à carte en matière plastique appliquée, avec :
- une tour à cartes (202) contenant les cartes en matière plastique ;
- un dispositif de traitement (VE, 204) qui saisit le repère d'identification de la carte en matière plastique et prépare un repère de contrôle ;
- une banque de données (DB) de laquelle peuvent être lues des données en fonction du repère d'identification ;
- un dispositif d'alimentation (404) qui contient des papiers non personnalisés déjà préimprimés ;
- un premier dispositif de retournement (406) qui est alimenté par le dispositif d'alimentation (404) ;
- une unité imprimante à jet d'encre (408) qui reçoit le papier préimprimé non personnalisé du premier dispositif de retournement (406) et qui imprime le support de carte sur base des données reçues du dispositif de traitement (VE) et munit le support de carte du repère de contrôle ;
- un second dispositif de retournement (410) qui reçoit les supports de carte imprimés ;
- un dispositif de pliage transversal ;
- un dispositif de lecture qui saisit et transmet au dispositif de traitement (VE) le repère de contrôle de la carte et qui détermine si le repère de contrôle transmis du support de carte coïncide avec le repère de contrôle dérivé du repère d'identification de la carte en matière plastique (106) présente pour assemblage avec le support de carte ;
- un dispositif d'application (202), relié au dispositif de traitement (VE), qui unit et assemble la carte en matière plastique avec le support de carte et émet le support de carte à carte en matière plastique lorsque les repères de contrôle de la carte en matière plastique et du support de carte coïncident ; et
- un dispositif (250) destiné à emballer le support de carte à carte en matière plastique appliquée ;
caractérisé par le fait que le dispositif de traitement (VE, 204) dérive le repère de contrôle à partir du repère d'identification de la carte en matière plastique (106), de sorte que, partant du repère de contrôle, aucun calcul de retour univoque au repère d'identification ne soit possible.

22. Système suivant l'une des revendications 19 à 21, caractérisé par le fait que le dispositif (250) destiné à emballer le support de carte à carte en matière plastique appliquée présente les caractéristiques suivantes :
- un dispositif de retournement (252) ;
- un dispositif de pliage longitudinal (254) ;
- un poste collecteur (256) ;
- un trajet de réunion (258) ;
- un dispositif d'emballage et de fermeture (260) ;
- un dispositif d'évacuation (262) ; et
- une bande d'entreposage (264).
